(19) Europäisches Patentamt
European Patent Office
Office européen des brevets

(11) **EP 2 226 482 B1**

(12) **EUROPÄISCHE PATENTSCHRIFT**

(45) Veröffentlichungstag und Bekanntmachung des Hinweises auf die Patenterteilung:
**09.05.2012 Patentblatt 2012/19**

(21) Anmeldenummer: **10001700.3**

(22) Anmeldetag: **19.02.2010**

(51) Int Cl.:
**F01N 9/00** *(2006.01)*      **F01N 3/20** *(2006.01)*
**F02D 41/24** *(2006.01)*

(54) **Verfahren zur Anpassung der Dosiermenge eines Reduktionsmittels zur selektiven katalytischen Reduktion**

Method for adjusting the dosage amount of a reducing agent for selective catalytic reduction

Procédé d'adaptation de la quantité de dosage d'un moyen de réduction destiné à la réduction catalytique sélective

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.03.2009 DE 102009012092**

(43) Veröffentlichungstag der Anmeldung:
**08.09.2010 Patentblatt 2010/36**

(73) Patentinhaber: **MAN Truck & Bus AG**
**80995 München (DE)**

(72) Erfinder:
• **Döring, Andreas**
**80339 München (DE)**
• **Walde, Florian**
**90599 Dietenhofen (DE)**

(56) Entgegenhaltungen:
**FR-A1- 2 816 986       FR-A1- 2 880 071**
**US-A1- 2004 159 096    US-A1- 2006 254 260**

**Beschreibung**

Gegenstand der Erfindung ist ein Verfahren gemäß dem Oberbegriff des Anspruches 1.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren. In sauerstoffreichem Abgas ist zusätzlich ein Reduktionsmittel erforderlich, um die Selektivität und die $NO_X$-Umsätze anzuheben.

Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können $V_2O_5$-haltige Mischoxide, beispielsweise in der Form $V_2O_5/WO_3/TiO_2$, verwendet werden. Typische $V_2O_5$-Anteile liegen dabei zwischen 0,2-3%. Auch der Einsatz von eisen- und/oder kupferhaltigen Zeolithen ist denkbar.

Als Reduktionsmittel kommen in der praktischen Anwendung Ammoniak oder Ammoniak abspaltende Verbindungen, wie Harnstoff oder Ammoniumformiat in fester oder Lösungsform zum Einsatz.

So zerfällt der Harnstoff bei hohen Temperaturen zu Isocyansäure und Ammoniak.

$$(NH_2)_2CO \Leftrightarrow NH_3 + HNCO \qquad (1)$$

Die Isocyansäure hydrolysiert mit im Abgas enthaltenem Wasser weiter zu $NH_3$ und $CO_2$.

$$HNCO + H_2O \Rightarrow NH_3 + CO_2 \qquad (2)$$

Bei vollständiger Hydrolyse von einem Mol Harnstoff entstehen somit zwei Mol Ammoniak und ein Mol Kohlendioxid.

$$(NH_2)_2CO + H_2O \Rightarrow 2NH_3 + CO_2 \qquad (3)$$

Dadurch steht durch die Hydrolyse von Harnstoff dasselbe bewährte Reduktionsmittel wie im Kraftwerksbereich, nämlich Ammoniak, zur Verfügung.

Für die Umsetzung von einem Mol Stickstoffmonoxid ist dabei ein Mol Ammoniak notwendig.

$$4NO+4NH_3+O_2 \Rightarrow 4N_2+6H_2O \qquad (4)$$

Das Verhältnis zwischen $NH_3$ und $NO_X$ wird als Feedverhältnis $\alpha$ bezeichnet.

$$\alpha=NH_3/NO_X \qquad (5)$$

Bei einem idealen Katalysator bedeutet dies, dass bei einem Feedverhältnis von eins alle Stickoxide reduziert werden, also ein 100%-iger $NO_X$ - Umsatz erreicht wird, da für den $NO_x$-Umsatz $X_{Nox}$ gilt:

$$X_{NOx} = \frac{c_{NOx,0} - c_{NOx}}{c_{NOx,0}}$$

mit:

$c_{NOx,0}$ :  $NO_X$-Rohemissionen [ppm]
$c_{NOx}$ :  $NO_X$-Emissionen nach Katalysator [ppm]

Wird den SCR-Katalysatoren ein platinhaltiger NO-Oxidationskatalysator zur Bildung von $NO_2$ vorgeschaltet

$$2NO+O_2 \Leftrightarrow 2NO_2 \qquad (6)$$

so kann die SCR-Reaktion erheblich beschleunigt und die Tieftemperaturaktivität merklich angehoben werden.

$$NO + 2NH_3 + NO_2 \Rightarrow 2N_2 + 3H_2O \qquad (7)$$

Allerdings ist in Gegenwart von $NO_2$ auch mit erhöhten Lachgasemissionen nach folgender Reaktion zu rechnen:

$$2\,NH_3 + 2\,NO_2 + \tfrac{1}{2}\,O_2 \Rightarrow 2\,N_2O + 3\,H_2O \qquad (8)$$

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen, wie schwankende Abgastemperaturen, Abgasmengen und $NO_X$-Rohemssionen, vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von Lachgas, Isocyansäure oder unverbrauchtem Ammoniak kommt.

Aktuell werden bei der Zudosierung des Reduktionsmittels für das SCR-Verfahren in Fahrzeugen zwei Methoden zur Bestimmung der korrekten Reduktionsmitteldosiermenge verwendet.

Zum einen ist dies eine reine Steuerung ohne Rückmeldung von Sensoren zur Bestimmung der tatsächlichen Emissionen hinter dem Katalysatorsystem. Die Dosiermenge wird dabei mit Hilfe von Modellen, aus Daten, die in einem Speicher eines elektronischen Motorsteuergerätes einer Brennkraftmaschine in Form von Tabellen bzw. Kurven, Kennfeldern oder Funktionen abgelegt sind und/oder ermittelt werden, und gegebenenfalls mit Hilfe von Sensoren zur Bestimmung der Katalysatortemperatur, der $NO_X$-und Abgasmenge bestimmt. So wird beispielsweise die Rohemission des Motors aus der Einspritzmenge, der Motordrehzahl, dem Einspritzdruck, dem Kraftstoff/Luftverhältnis usw. berechnet. Die möglichen $NO_X$-Umsätze und die dafür nötigen Dosiermengen an Reduktionsmittel hängen wiederum von der Katalysatortemperatur, der $NO_X$-Rohemission, der Abgasmenge etc. ab. Die tatsächlichen Emissionen hinter dem System werden nicht detektiert und haben somit keinen Einfluss auf die Dosiermenge (DE 43 15 278 A1, DE 195 36 571 A1, DE 199 06 344 A1, EP 898 061 A1).

Der Nachteil dieser Methode besteht darin, dass auf Grund der fehlenden Rückmeldung über die tatsächlichen Emissionen, Fehler, Defekte oder Umwelteinflüsse kaum ausgeglichen werden können.

Die zweite Möglichkeit besteht darin, einen klassischen geschlossenen Regelkreis mit Hilfe von $NO_X$-Sensoren hinter dem System aufzubauen. Hierfür werden die von den Sensoren aktuell gelieferten Ist-Werte mit den Soll-Werten verglichen und die Dosiermenge laufend angepasst.

Allerdings besteht das Problem der permanenten Regelung in der Trägheit des Systems und der Sensoren sowie des gleichzeitig hochdynamischen Betriebs der Brennkraftmaschine in Fahrzeugen. So können beispielsweise während Beschleunigungsvorgängen bzw. Lastaufschaltungen an abgasaufgeladenen Brennkraftmaschinen innerhalb einer Sekunde die $NO_X$-Emissionen um den Faktor 10 ansteigen. Bei Saugmotoren erfolgt der Anstieg auf Grund der fehlenden Trägheit des Abgasturboladers noch schneller. Gleiches gilt bei Lastabwurf bzw. beim Übergang in den Schubbetrieb.

Die Sensoren zur Bestimmung der Emissionen sind nicht in der Lage, diese hochdynamischen Vorgänge zu detektieren. Zum einen liegt dies an der Trägheit der Sensoren, deren typische t90-Zeit, also die Zeit, bei der 90% des Endwertes erreicht ist, bei 300-500ms anzusiedeln ist, zum anderen an der notwendigen Positionierung der Sensoren hinter dem Katalysatorsystem. So beträgt allein die Gaslaufzeit vom Austritt aus dem Zylinderkopf bis zum Austritt aus dem Katalysatorsystem je nach Abgasvolumenstrom und Volumen der Abgasanlage 200-2000ms.

Eine Möglichkeit, dieses Problem teilweise zu lösen, besteht darin, über einen längeren Zeitraum die Soll- und Ist-Emissionen auf zu addieren bzw. auf zu integrieren und die Dosiermenge je nach Unterschied zwischen Soll und Ist anzupassen (DE 101 00 420 A1).

Die für die Regelung benötigten $NO_X$-Sensoren sind in JP 63038154 A, JP 10062374 A und JP 9288084 A beschrieben. Diesen Sensoren ist gemein, dass sie eine hohe Querempfindlichkeit gegenüber reduzierenden Abgasbestandteilen aufweisen. Dies ist beim Einsatz solcher Sensoren in SCR-Systemen besonders problematisch, da hier hohe Mengen des starken Reduktionsmittels Ammoniak im Abgas vorhanden sein können. Da Ammoniak ein ähnlich hohes Signal wie $NO_X$ liefert, ist es nicht möglich, zwischen $NO_X$ und $NH_3$ zu unterscheiden, d.h. hohe Sensorsignale können hohen $NO_X$- und/oder hohen $NH_3$-Konzentrationen entsprechen. Tritt stromab des SCR-Katalysators unverbrauchtes Ammoniak aus, ist es aus diesem Grund nicht mehr möglich, auf eine bestimmte $NO_X$-Konzentration stromab des SCR-Katalysators zu regeln.

In der US 2004/0159096 A1 ist weiterhin eine Abgasreinigungsvorrichtung und ein Verfahren für einen Verbrennungsmotor sowie eine Motorsteuereinheit angegeben, um die einem selektiven NOx-Reduktionskatalysator zugeführte Reduktionsmittelmenge geeignet zu bestimmen und um gute Abgaseigenschaften sicherzustellen. Die Abgasreinigungsvorrichtung umfasst dabei eine Kontrolleinheit (ECU), einen selektiven NOx-Reduktionskatalysator zum Reinigen von NOx in Abgasen in einem Auspuffrohr, einen NOx-Sensor, der in dem Auspuffrohr stromab des selektiven NOx-Reduktionskatalysators angeordnet ist, um eine NOx-Konzentration in den Abgasen zu erfassen, sowie eine Einspritzdüse zum Versorgen des selektiven NOx-Reduktionskatalysators mit Ammoniak, der in einer Ammoniakproduktionseinheit produziert wird. Die ECU bestimmt die Ammoniakmenge (Tinh), die durch die Einspritzdüse zu dem selektiven NOx-Reduktionskatalysator eingespritzt wird, sodass eine Schätzung der von dem NOx-Sensor erfassten NOx-Konzentration einen Minimalwert erreicht.

Hiervon ausgehend liegt der Erfindung die Aufgabe zu Grunde, die beschriebenen Nachteile des Standes der Technik zu vermeiden. Diese Aufgabe wird gelöst gemäß dem kennzeichnenden Teil des Anspruchs 1.

Das erfindungsgemäße Verfahren wird in Verbindung mit einer Abgasnachbehandlungsanlage zur Dosierung eines ammoniakabspaltenden Reduktionsmittels in den Abgasstrom einer, z.B. in einem Fahrzeug verbauten, mit Luftüberschuss betriebenen Brennkraftmaschine angewandt. Wie bei solchen Anordnungen üblich, erfolgt die Dosierung des Reduktionsmittels mit Hilfe einer von einem Steuergerät gesteuerten, der Abgasnachbehandlungsanlage zugeordneten Dosiereinrichtung. Zur Stickoxidreduktion ist stromab zur Dosiereinrichtung im Abgasstrom, als weiterer Teil der Abgasnachbehandlungsanlage wenigstens ein SCR-Katalysator angeordnet.

Die Dosiermenge des Reduktionsmittels - bei heute üblichen Anlagen handelt es sich meist um wässrige Harnstofflösung, aber auch andere Reduktionsmittel (Ammoniak oder Ammoniak abspaltende Verbindungen, wie Harnstoff oder Ammoniumformiat in fester oder Lösungsform) sind denkbar - wird von dem Steuergerät mit Hilfe eines in diesem gespeicherten, alle möglichen Betriebspunkte der Brennkraftmaschine bzw. der Abgasnachbehandlungsanlage abdeckenden Modells vorgenommen.

Unter einem Modell ist dabei im einfachsten Fall eine Kennlinie oder ein Kennlinienfeld zu verstehen, es kann sich aber auch um eine Vielzahl von Kennlinien, Kennlinienfelder oder auch um ein- oder mehrparametrige Funktionen handeln, die mit Hilfe einer sogenannten Referenzanordnung und/ oder durch theoretische Überlegungen ermittelt bzw. festgelegt werden. Bei der Referenzanordnung handelt es sich im vorliegenden Fall um eine, für eine Baureihe typische Anordnung aus Brennkraftmaschine und Abgasnachbehandlungssystem die bereits in einem Fahrzeug verbaut sein kann. Durch Messungen an der Referenzanordnung und/ oder durch theoretische Überlegungen wird für eine Vielzahl von Betriebspunkten der Anordnung einerseits eine Dosiermenge des Reduktionsmittels bestimmt und andererseits zu diesen Betriebspunkten eine Soll-Emission ermittelt. Jeder Betriebspunkt wird dabei durch den Wert wenigstens eines Betriebsparameters der Referenzanordnung definiert. Die ermittelten Dosiermengen werden in Form eines Modells in den Steuergeräten der entsprechenden Baureihe vorgehalten, derart, dass aus dem Modell, für alle möglichen Werte, die der wenigstens eine Betriebsparameter annehmen kann, also für alle Betriebspunkte die vorkommen, eine der Dosiermenge proportionale Größe direkt oder durch Interpolation mittels des Steuergerätes gewonnen werden kann.

Aus diesem Modell, also den Kennlinien, Kennlinienfelder oder Funktionen ermittelt das Steuergerät, in Abhängigkeit von dem wenigstens einen durch das Steuergerät ausgewerteten Betriebsparameter der Brennkraftmaschine und/ oder der Abgasnachbehandlungsanlagen, die Dosiermenge. Der jeweilige Augenblickswert des wenigstens einen Betriebsparameters bestimmt dabei den jeweiligen Betriebspunkt der Brennkraftmaschine und/oder der Abgasnachbehandlungsanlage. In der Praxis handelt es sich häufig nicht um nur einen, sondern um eine Vielzahl von Betriebsparametern die Einfluss auf die richtige Dosiermenge des Reduktionsmittel haben, folglich ist diese mehrfache Abhängigkeit im Modell zu berücksichtigen.

Nachdem diese mehrfache Abhängigkeit aber nicht konstant ist, sondern insbesondere einer zeitlichen, also durch die Anzahl der Betriebsstunden einer Anlage bedingten, sowie einer durch Umwelteinflüsse bedingten Änderung unterliegt, muss die über das Modell ermittelte Dosiermenge einer Korrektur unterzogen werden.

Der Kern der Erfindung besteht darin, die Dosiermenge für das Reduktionsmittel zwar über Modelle, also in einem Steuergerät in Form von Tabellen und/oder Kurven und/ oder Kennfeldern und/ oder Funktionen gespeicherten Daten unter Zuhilfenahme von mittels Sensoren detektierten Größen wie z.B. Katalysatortemperatur, Abgasmenge usw. zu ermitteln und gesteuert zuzugeben, aber zudem, ausgehend von der gesteuert zugegebenen, den Ausgangswert darstellenden Dosiermenge, diese in bestimmten Betriebsphasen definiert zu verändern und die Reaktion des SCR-Katalysators mit Hilfe eines stromab zu diesem angebrachten $NO_X$-Sensors zu ermitteln und mit einer im Steuergerät ermittelten theoretisch zu erwartenden Reaktionen die sich aus der Veränderung ergeben müsste zu vergleichen. Der Grad der Übereinstimmung der ermittelten Reaktion mit der erwarteten Reaktion oder, anders ausgedrückt, die Art der Abweichung der ermittelten Reaktion von der erwarteten Reaktion zeigt an, ob der SCR-Katalysator im optimalen Bereich betrieben wird oder ob die $NO_X$-Konzentration oder die $NH_3$-Konzentration für den jeweiligen Betriebspunkt zu hoch ist.

Aus der Veränderung des Sensorsignals kann also auf das Vorhandensein von $NO_X$ und/oder $NH_3$ geschlossen werden, wobei im einfachsten Fall drei Bereiche zu unterscheiden sind:

1. Eine Erhöhung der Dosiermenge führt zu einer Verringerung des Sensorsignals:

Dies bedeutet, dass die zusätzlich zugeführte Reduktionsmittelmenge zur Reduktion der Stickoxide geführt hat, d.h. der $NO_X$-Sensor detektiert $NO_X$.

2. Eine Erhöhung der Dosiermenge führt zu keiner oder nur einer geringen Veränderung des Sensorsignals:

Der optimale Betriebspunkt des SCR-Systems ist erreicht, d.h. $NO_X$ und $NH_3$ sind minimal.

3. Eine Erhöhung der Dosiermenge führt zu einer Erhöhung des Sensorsignals:

Das SCR-System ist "überfahren", die zusätzlich zugeführte Reduktionsmittelmenge führt zu einem Anstieg der $NH_3$-Emissionen, d.h. der $NO_X$-Sensor detektiert vorwiegend $NH_3$.

Aus der Größe der Veränderung der zugeführten Dosiermenge kann man über die oben aufgeführten Reaktionsgleichungen (1) bis (7) den theoretisch zu erwartenden Wert der Veränderung des Sensorsignals mittels des Steuergerätes berechnen. Durch die vorstehend beschriebene Art der Änderung des Sensorsignals kann das Steuergerät ermitteln, ob im nächsten Schritt die Dosiermenge angehoben oder reduziert werden muss oder ob die optimale Wirkung des SCR-Katalysators oder die Wunsch-$NO_X$-Menge bzw. -Konzentration erreicht ist.

Bei der für die Beurteilung der Veränderung herangezogenen Größe kann es sich um eine Veränderung der $NO_X$-Konzentration, also dem Messwert des dem SCR-Katalysators nachgeordneten $NO_X$-Sensors handeln, aber auch die Verwendung einer davon abgeleiteten Größe, wie z.B. des $NO_X$-Umsatzes, ist möglich, Um Fehler in der Ermittlung des $NO_X$ - Umsatzes zu minimieren, bietet es sich an, die $NO_X$ -Rohemission mit Hilfe eines $NO_X$ -Sensors vor dem SCR-Katalysator zu bestimmen. Aus Kostengründen kann die $NO_X$ -Rohemission aber auch über geeignete Modelle ermittelt werden.

Die Veränderung der Dosiermenge wird so lange fortgesetzt, bis der Vergleich der erwartete Veränderung mit der messtechnisch bestimmten Veränderung anzeigt, dass die $NO_X$-Sollemission und/oder der optimale Betriebspunkt des SCR-Katalysators erreicht ist. An diesem optimalen Betriebspunkt haben sowohl die $NO_X$-Abgasanteile als auch die $NH_3$-Abgasanteile ein Minimum. Zur Ermittlung eines Korrekturwertes wird dann der erreichte Wert der Dosiermenge mit dem Ausgangswert der Dosiermenge verglichen und daraus ein Korrekturwert gewonnen. Mit diesem Korrekturwert wird die Dosiermenge angepasst. Es lässt sich demnach mit Hilfe des erfindungsgemäßen Verfahrens auf einfache und damit vorteilhafte Weise, die Dosiermenge an zeitlich- oder umweltbedingte Änderungen des Systems aus Brennkraftmaschine und Abgasnachbehandlungsanordnung anpassen.

Bei der Bestimmung des Korrekturwertes ist es vorteilhaft, zusätzlich den Wert wenigstens eines Betriebsparameters, mit dem die Anlage aus Brennkraftmaschine und Abgasnachbehandlungsanordnung aktuell betrieben wird, zu ermitteln und den Korrekturwert mit dem Wert des wenigstens einen Betriebsparameters verknüpft im Steuergerät abzuspeichern. Dies eröffnet in vorteilhafter Weise die Möglichkeit, die Korrektur der Dosiermenge zu einem späteren Zeitpunkt betriebsparameterabhängig anzuwenden. Dazu wird, abhängig vom aktuellen Wert des wenigstens einen zugehörigen Betriebsparameters, die in einem Speicher des Steuergerät mittels des Modells vorgehaltene zugehörige Dosiermenge und der zugehörige im Speicher des Steuergerät abgelegte betriebsparameterbezogene Korrekturwert zur Ermittlung der korrekten Dosiermenge durch das Steuergerät herangezogen.

Bei den Betriebsparametern, mit denen verknüpft die Korrekturwerte im Speicher des Steuergerätes abgespeichert sind, kann es sich vorteilhaft um die Kühlmitteltemperatur und/oder die Öltemperatur und/oder die Kraftstofftemperatur und/oder den Kraftstoffeinspritzdruck und/oder die Sauglufttemperatur und/oder die Ladelufttemperatur und/oder die Turboladerdrehzahl und/oder den Ladedruck und/oder die Luftmasse und/oder die Abgasmasse und/oder die Fahrgeschwindigkeit und/oder die Motordrehzahl und/oder die Kraftstoffeinspritzmenge und/oder die Abgastemperaturen und/oder die Katalysatortemperatur und/oder die Reduktionsmitteleinspritzmenge und/oder die Abgasrückführungsrate und/oder den Abgasmassenstrom und/oder den Reduktionsmitteldruck und/oder die Betriebsstunden und/oder die Luftfeuchte und/oder den Atmosphärendruck und/oder die $NO_X$-Rohemission handeln.

Es können für unterschiedliche Betriebsparameter und/oder für unterschiedliche Werte der Betriebsparameter unterschiedliche Korrekturwerte bestimmt und abgelegt werden.

Eine betriebsparameterbezogene Korrektur bedingt einerseits, dass der Betriebsparameterwert während des Ermittlungsvorganges des Korrekturwertes stationär sein muss, dass also ein stationärer Betriebszustand der Anordnung aus Brennkraftmaschine und Abgasnachbehandlungsanlage vorliegen muss. Andererseits muss eine große Anzahl von Korrekturwerten ermittelt werden.

Die Gesamtheit der Korrekturwerte kann dabei in Form von Kennlinien, Kennfeldern oder ein- oder mehrparametrigen Korrekturfunktionen also analog zu den im Modell vorgehaltenen Dosiermengen in dem Steuergerät gespeichert sein. Um die Anzahl der zu ermittelnden und zu speichernden Korrekturwerte vorteilhaft zu reduzieren, besteht die Möglichkeit, aus zu benachbarten Betriebsparameterwerten gespeicherten Korrekturwerten, durch lineare Interpolation, für dazwischen liegende Betriebsparameterwerte Korrekturwerte rechnerisch zu ermitteln.

Um die Trägheit, insbesondere des $NO_X$-Sensors, vorteilhaft auszugleichen können die zur Ermittlung der Reaktion des SCR-Katalysators benötigten Ist-Sensorwerte oder davon abgeleitete Größen, wie z.B. Ist-$NO_X$-Umsätze, über einen vorgebbaren Zeitraum aufaddiert und/oder aufintegriert werden.

Weiterhin besteht die Möglichkeit die Betriebsparameter in einem zeitlich vorgelagerten Vorgang jeweils in Wertebereiche oder Klassen aufzuteilen, und im Betrieb Korrekturwerte klassenabhängig zu ermitteln und für alle Betriebsparameterwerte innerhalb der jeweiligen Klasse anzuwenden. Dabei kann durch die Wahl der Wertebereiche, innerhalb derer sich der wenigstens eine Betriebsparameter bewegen darf, der Fehler, der sich durch diese Klassenbildung ergibt, in einer vernachlässigbaren Größenordnung gehalten werden. Mit anderen Worten: Die Festlegung der Wertebereiche erfolgt so, dass der Betriebsparameter innerhalb des Wertebereiches, also der Klasse, als quasi stationär angesehen werden kann. Auf diese Weise lässt sich einerseits die Anzahl von benötigten Korrekturwerten drastisch und damit vorteilhaft reduzieren, andererseits können Korrekturwerte in vorteilhafter Weise wesentlich häufiger ermittelt werden, weil die Betriebsparameter während der Ermittlung der Korrekturwerte innerhalb der Wertebereiche oder Klassen variieren dürfen. Jeder für die Korrektur als relevant herangezogene Betriebsparameter weist dabei wenigstens zwei Wertebereiche oder Klassen auf. Die Wertebereiche sind dabei wie bereits ausgeführt, so gewählt, dass der durch das Variieren des Betriebsparameterwertes bedingte Fehler bei der Ermittlung des Korrekturwertes vernachlässigbar ist.

Verlässt der aktuelle Betriebspunkt der Anlage während der Ermittlung eines Korrekturwertes eine Betriebsparameter-Klasse, ergeben sich zwei alternative Verfahrensführungen: Einerseits kann der Vorgang an dieser Stelle unterbrochen und das bis dahin erreichte Ergebnis zwischengespeichert werden. Kehrt der aktuelle Betriebspunkt der Anlage in diese Betriebsparameter-Klasse zurück, wird die Ermittlung des Korrekturwertes fortgesetzt. Der Vorgang kann sich so lange wiederholen, bis der Korrekturwert ermittelt ist. Insbesondere kann das Aufaddieren oder Aufintegrieren des Ist-Sensorwertes und/ oder des Ist-$NO_X$-Umsatzes unterbrochen und der bis dahin erreichte Wert zwischengespeichert werden, um das Aufaddieren oder Aufintegrieren bei Rückkehr des aktuellen Betriebspunktes der Anlage in die entsprechende Betriebsparameterklasse wieder aufzunehmen.

Andererseits besteht die Möglichkeit, dann, wenn der aktuelle Betriebspunkt der Anlage eine Betriebsparameter-Klasse verlässt, während ein Korrekturwert ermittelt wird, den Ermittlungsvorgang abzubrechen und die bis dahin erreichten Ergebnisse zu verwerfen. Insbesondere kann das Aufaddieren oder Aufmtegrieren des Ist-Sensorwertes und/ oder des Ist-$NO_X$-Umsatzes unterbrochen und die bis dahin ermittelte Summe verworfen werden.

Beide Alternativen haben Vor- und Nachteile. Im ersten Fall können, zumindest theoretisch, Tage oder sogar Wochen vergehen, bis eine Korrekturwertermittlung abgeschlossen ist, wodurch sich zeitlich bedingte Einflüsse oder Umwelteinflüsse auswirken und das Messergebnis verfälschen könnten. Dem kann man begegnen, indem man die Gültigkeit zwischengespeicherter Werte zeitlich begrenzt. Vorteilhaft ist bei der Verfahrensführung mit Zwischenspeicherung, dass die Häufigkeit, in der aktuelle Korrekturwerte zur Verfügung stehen, stark erhöht wird. Im zweiten Fall ist sichergestellt, dass eine Korrekturwertermittlung in einem Zug erfolgt, also zwischen Anfang und Ende des Vorgangs nur Sekunden liegen. In solchen kurzen Zeiträumen kommen zeitlich bedingte Einflüsse oder Umwelteinflüsse nicht zum Tragen, haben also keine Auswirkung auf die Korrekturwertermittlung. Andererseits wird aber die Häufigkeit, in der aktuelle Korrekturwerte zur Verfügung stehen, stark reduziert.

Bei den Betriebsparametern zur Ermittlung eines stationären oder klassenbezogen quasi stationären Betriebszustands kann es sich vorteilhaft um die Kühlwassertemperatur und/oder die Öltemperatur und/oder die Kraftstofftemperatur und/oder den Kraftstoffeinspritzdruck und/oder die Sauglufttemperatur und/oder die Ladelufttemperatur und/ oder die Turboladerdrehzahl und/oder den Ladedruck und/oder die Fahrgeschwindigkeit und/oder die Motordrehzahl und/oder die Kraftstoffeinspritzmenge und/oder die Abgastemperaturen und/oder die Katalysatortemperatur und/oder die Reduktionsmitteleinspritzmenge und/oder die Abgasrückführungsrate und/oder den Reduktionsmitteldruck und/oder die Emissionen und/oder das Kraftstoff-/Luftverhältnis handeln und/ oder es kann die zeitliche Änderung dieser Größen herangezogen werden.

Nachfolgend wird die Erfindung an Hand von Ausführungsbeispielen in Verbindung mit der Zeichnung näher erläutert. Dabei zeigen:

Fig. 1    Eine erste Grafik zur Veranschaulichung des Sensorsignals in Abhängigkeit vom Feedverhältnis
Fig. 2    Ein Flussdiagramm, das analog zur Grafik in Fig. 1 die Vorgehensweise erläutert
Fig. 3    Eine zweite Grafik zur Veranschaulichung des Sensorsignals in Abhängigkeit vom Feedverhältnis
Fig. 4    Ein Flussdiagramm, das analog zur Grafik in Fig. 3 die Vorgehensweise erläutert
Fig. 5    Eine Grafik für einen beispielhaften zeitlichen Verlauf zur Ermittlung eines Korrekturwerts für die Dosiermenge des Reduktionsmittels.

Für die nachfolgenden Ausführungen wird von einer Abgasnachbehandlungsanlage zur Dosierung eines ammoniakabspaltenden Reduktionsmittels in den Abgasstrom einer, z.B. in einem Fahrzeug verbauten, mit Luftüberschuss betriebenen Brennkraftmaschine ausgegangen. Weiter wird angenommen, dass der in der Abgasnachbehandlungsanlage stromab zu einem SCR-Katalysator angeordnete Sensor die im Abgas befindlich Menge an $NO_X$ detektiert, aber auch eine Empfindlichkeit für $NH_3$ aufweist.

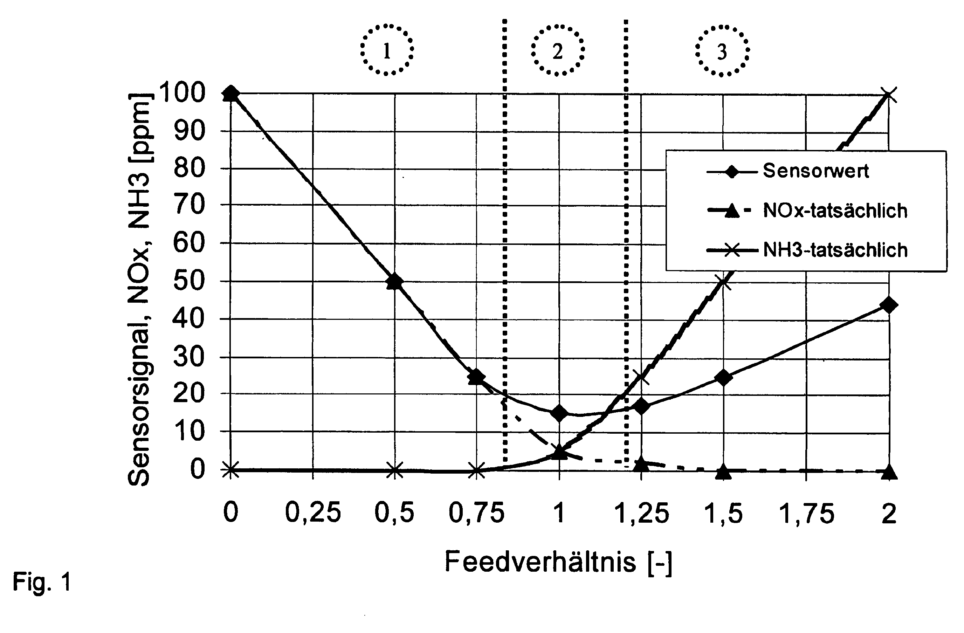

Die Grafik gemäß Fig. 1 veranschaulicht das Sensorsignal in Abhängigkeit vom Feedverhältnis, also dem Verhältnis zwischen $NH_3$ und $NO_X$. Da für die Reduzierung von einem Mol $NO_X$ ein Mol $NH_3$ notwendig ist, müsste im Idealfall eine Erhöhung der $NH_3$-Menge zu einer gleichgroßen Verringerung der $NO_X$-Emissionen führen. Dieses Verhalten ist im Bereich

1 der Fig. 1 zu erkennen. Der sich aus der Veränderung des Feedverhältnisses, also der Veränderung der Reduktionsmittelmenge, ergebende Erwartungswert und das Sensorsignal sind nahezu identisch. Liegt der Sensorwert dagegen oberhalb des Erwartungswerts, wie in den Bereichen 2 und 3, so liegt neben $NO_X$ auch oder gar ausschließlich $NH_3$ vor. Der Ammoniakschlupf kann demnach auch bereits deutlich unterhalb des optimalen Betriebspunktes auftreten.

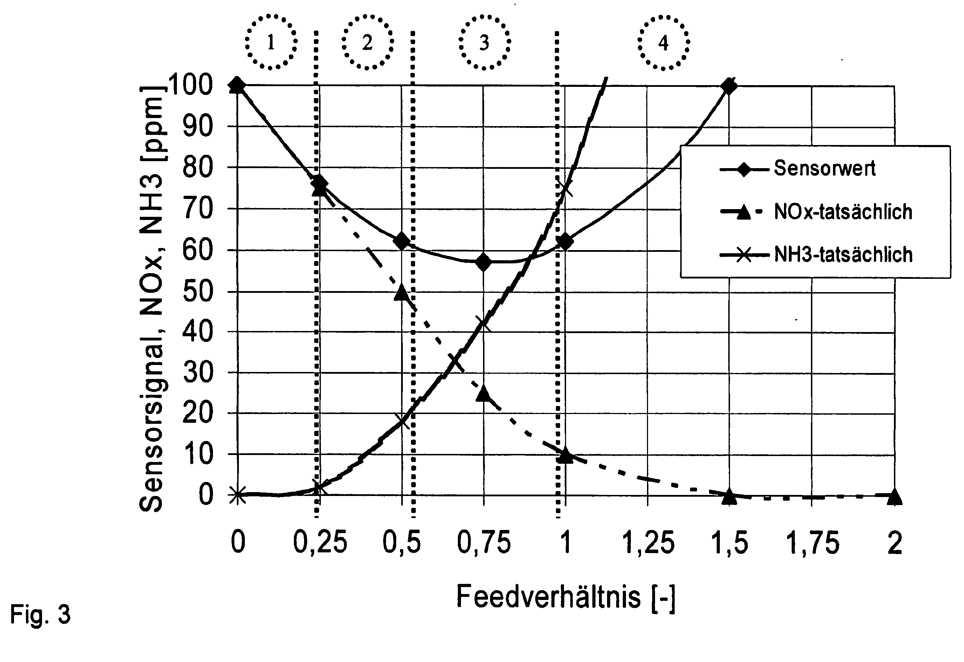

Auf eine Abnahme des Wirkungsgrads des Systems, die sich durch diese Erhöhung des Sensorsignals äußern würde, würde das erfindungsgemäße Verfahren mit einer Veränderung der zugeführten Reduktionsmittelmenge reagieren. Hierbei sind vier Bereiche zu unterscheiden, wie dies in der Grafik nach Fig. 3 veranschaulicht ist.

1. Eine Erhöhung der Dosiermenge führt zu einer Verringerung des Sensorsignals:

Dies bedeutet, dass die zusätzlich zugeführte Reduktionsmittelmenge zur Reduktion der Stickoxide geführt hat, d.h. der $NO_X$-Sensor detektiert ausschließlich $NO_X$. Demzufolge kann die Dosiermenge zum Erreichen eines gewünschten Umsatzes bzw. einer gewünschten $NO_x$-Emission weiter erhöht werden, d.h. der Korrekturwert kann angehoben werden.

2. Eine Erhöhung der Dosiermenge führt zwar zu einer Verringerung des Sensorsignals, diese entspricht jedoch nicht der erwarteten Reduktion:

Zusätzlich zur $NO_X$-Emission wird auch ein $NH_3$-Anteil gemessen, was zu einem Abflachen der Steigung führt. Der Übergang von Bereich 1 in den Bereich 2 kann also als optimaler Betriebspunkt bezeichnet werden, d.h. der Korrekturwert sollte nicht verändert werden.
3. Eine Erhöhung der Dosiermenge führt zu keiner Veränderung des Sensorsignals, da die Verminderung von $NO_X$ durch die Emission von $NH_3$ kompensiert wird:
Der optimale Betriebspunkt ist überschritten, die Dosiermenge und demzufolge der Korrekturwert müssen reduziert werden.
4. Eine Erhöhung der Dosiermenge führt zu einer Erhöhung des Sensorsignals:
Das SCR-System ist "überfahren", die zusätzlich zugeführte Reduktionsmittelmenge führt zu einem Anstieg der $NH_3$-Emissionen, d.h. der $NO_X$-Sensor detektiert vorwiegend $NH_3$. Die Dosiermenge und demzufolge der Korrekturwert müssen reduziert werden.

Nachdem auf diese Weise ermittelt wurde, ob es sich bei dem Sensorsignal um $NO_X$, $NO_X$ + $NH_3$ oder nur $NH_3$ handelt, d.h. in welchem Bereich der Umsatzkurve der Katalysator gerade arbeitet, kann die Dosiermenge über mindestens einen Korrekturwert so angepasst werden, dass sich ein Soll-Umsatz oder eine Soll- $NO_X$-Emission oder ein optimaler $NO_X$-Umsatz ergibt. Dieser Korrekturwert wird in einem Speicher eines elektronischen Steuergerätes abgelegt und dient für nachfolgende Dosiervorgänge der Korrektur der aus den Modellen gelieferten Vorsteuerwerte für die Dosiermenge.

Die tatsächlich zugegebene Dosiermenge $m_{Reduktionsmittel}$ zum Zeitpunkt $t$ ergibt sich demnach aus einer aus Modellen, in Form von abgespeicherten Daten, wie Kurven, Kennfeldern, Tabellen oder Funktionen, ermittelten Dosiermenge $m_{Reduktionsmittel,Modell}$ und mindestens einem Korrekturwert $K$, der zu einem früheren Zeitpunkt ($t'$) ermittelt wurde.

Allgemein kann man schreiben:

$$m_{Reduktionsmittel}(t) = K(t') \bullet m_{Reduktionsmittel,Modell}$$

wobei $t$ die aktuelle Zeit, $t'$ eine Zeit in der Vergangenheit und $m_{Reduktionsmittel,Modell}$ die Reduktionsmittelmenge aus dem Modell beschreibt.

Vorteilhaft ist es zudem, die Korrekturwertermittlung in Betriebsphasen, in denen die Emissionen für die Ermittlung der Korrekturwerte durch die Veränderung der Dosiermenge ausreichend genau bestimmt werden können, durchzuführen. Dies sind jene Betriebsphasen, in denen das Abgasnachbehandlungssystem und/oder die Brennkraftmaschine sich in einem möglichst stationären Zustand befinden, so dass die Totzeiten der Sensoren und/oder die Trägheit des Systems keinen Einfluss mehr auf die Bestimmung der Ist-Emissionen und/oder der Einflussparameter haben.

Zur Ermittlung eines stationären Betriebszustands der Brennkraftmaschine und/oder des Katalysatorsystems kann es sinnvoll sein, die Kühlwassertemperatur und/oder die Öltemperatur und/oder die Kraftstofftemperatur und/oder den Kraftstoffeinspritzdruck und/oder die Sauglufttemperatur und/oder die Ladelufttemperatur und/oder die Turboladerdrehzahl und/oder den Ladedruck und/oder die Luftmasse und/oder die Abgasmasse und/oder die Fahrgeschwindigkeit und/oder die Motordrehzahl und/oder die Kraftstoffeinspritzmenge und/oder die Abgastemperaturen und/oder die Katalysatortemperatur und/oder die Reduktionsmitteleinspritzmenge und/oder die Abgasrückführungsrate und/oder den Reduktionsmitteldruck und/oder die Emissionen und/oder das Kraftstoff-/Luftverhältnis und/oder die zeitliche Änderung dieser Größen als Bewertungskriterien heranzuziehen. Selbstverständlich werden in der Praxis nicht alle vorgenannten Größen bzw. Betriebsparameter zur Ermittlung des stationären Betriebszustands benutzt, sondern eine vergleichsweise kleine Anzahl von sytsembedingt relevanten Betriebsparametern.

Beim Betrieb von Fahrzeugen, bei denen ständig zwischen Beschleunigungs- und Abbremsvorgängen gewechselt wird, wie z.B. bei Stadtfahrten, kann der Zeitraum zwischen den Überprüfungen der Emissionen und damit der Erneuerung des Korrekturwertes zwischen 30 bis 60 Minuten betragen. Um eine häufigere Überprüfung zu ermöglichen und gleichzeitig die Antwort des Systems auf veränderte Reduktionsmittelmengen möglichst genau zu detektieren, ist es denkbar, die Soll- und Ist-Sensorwerte und/oder Soll- und Ist-Umsätze und/oder Soll- und Ist-Veränderungen über einen längeren Zeitraum aufzuaddieren bzw. aufzuintegrieren. Dadurch werden kurzfristige Schwankungen von Betriebsparametern und/oder das Rauschen der Sensorwerte, die zu einer fehlerhaften Ermittlung des Korrekturwerts $K$ führen könnten, minimiert.

Wie bereits ausgeführt reicht oft die Ermittlung nur eines einzigen, globalen Korrekturwerts nicht aus, da die erreichbaren Umsätze des SCR-Katalysators von mehreren Betriebsparametern - nachfolgend auch als Einflussparameter $E$ bezeichnet - die unterschiedliche Betriebszustände der Brennkraftmaschine und/ oder des Nachbehandlungssystems beschreiben, abhängen. Als Einflussparameter sind die Kühlwassertemperatur und/oder die Öltemperatur und/ oder die Kraftstofftemperatur und/oder der Kraftstoffeinspritzdruck und/oder die Sauglufttemperatur und/oder die Ladelufttemperatur und/oder die Turboladerdrehzahl und/oder der Ladedruck und/oder die Luftmasse und/oder die Abgasmasse und/oder die Fahrgeschwindigkeit und/oder die Motordrehzahl und/oder die Kraftstoffeinspritzmenge und/oder die Abgastemperaturen und/oder die Katalysatortemperatur und/oder die Reduktionsmitteleinspritzmenge und/oder die Abgasrückführungsrate und/oder der Abgasmassenstrom und/oder der Reduktionsmitteldruck und/oder die Betriebsstunden und/oder die Luftfeuchte und/oder der Atmosphärendruck und/oder die $NO_X$-Rohemission denkbar.

Um den gesamten Betriebsbereich der Brennkraftmaschine und/oder des Nachbehandlungssystems abdecken zu können, werden für unterschiedliche Werte dieser Einflussparameter unterschiedliche Korrekturwerte bestimmt. Diese können in Tabellen aber auch in Kennlinien (einparametrigen Korrekturfunktionen) und/oder in Kennfeldern (zweiparametrigen Korrekturfunktionen) und/oder in mehrparametrigen Funktionen als Speicherwerte im Steuergerät der Anlage abgelegt werden, wobei zur Ermittlung der aktuellen Korrekturwerte zwischen diesen unterschiedlichen Korrekturwerten zur Laufzeit, also während des Betriebes, interpoliert werden kann.

Die tatsächlich zugegebene Dosiermenge $m_{Reduktionsmittel}$ zum Zeitpunkt $t$ ergibt sich dann aus einer aus abgespeicherten Daten, in Form von Kurven, Tabellen oder Funktionen, ermittelten Dosiermenge $m_{Reduktionsmittel,Modell}$ und mindestens einem, mit einem Einflussparameter $E$ verknüpften Korrekturwert $K_E$, der zum Zeitpunkt $t'$ bestimmt wurde.

Allgemein kann man schreiben:

$$m_{Reduktionsmittel}(t) = K_E(t') \bullet m_{Reduktionsmittel,Modell}$$

wobei $t$ die aktuelle Zeit und $t'$ eine Zeit in der Vergangenheit beschreibt.

Zur Ermittlung der Auswirkung unterschiedlicher Werte des Einflussparameters ist die Abweichung von Soll- und Ist-Emissionen, bzw. Soll- und Ist-Umsätzen bei mindestens zwei unterschiedlichen Werten für den Einflussparameter und damit zu zwei unterschiedlichen Zeitpunkten in der Vergangenheit zu ermitteln. Wie bereits oben beschrieben, ist es vorteilhaft, die Ermittlung der Korrekturwerte bei stationärem Zustand des Nachbehandlungssystems und/oder Motors durchzuführen.

Beispielhaft soll das Verfahren zur Verwendung unterschiedlicher Korrekturwerte bei unterschiedlichen Größen eines Einflussparameters für den Einflussparameter "Abgasmassenstrom" dargestellt werden:

- Bei der Überprüfung während des stationären Betriebs wird bei einem Abgasmassenstrom von 1000kg/h ein Korrekturwert von 120% ermittelt,

- bei 2000kg/h ergibt sich ein Korrekturwert von -90%,

- bei 3000kg/h ergibt sich ein Korrekturwert von 130%.

Die so ermittelten Korrekturwerte werden in Form einer Kennlinie aufgetragen und den Abgasmassenströmen 1000kg/h, 2000kg/h und 3000kg/h zugeordnet:

| Abgasmassenstrom[kg/h] | 1000 | 2000 | 3000 |
|---|---|---|---|
| Korrekturwert [%] | 120 | 90 | 130 |

Während des instationären Motorbetriebs kann dann anschließend, vorteilhaft durch lineare Interpolation, der jeweils aktuelle Korrekturwert aus der Kennlinie ermittelt und zur Anpassung der modellbasiert gesteuerten Dosiermenge verwendet werden. So ergäbe sich beispielsweise für einen aktuellen Abgasmassenstrom von 1500kg/h ein Korrekturwert von 105%, um den die Dosiermenge korrigiert würde.

Die Korrekturwerte können in Form von relativen Werten, wie oben beschrieben, oder in Form von Absolutwerten, wie z. B. geänderten Reduktionsmittelmassenströmen, bestimmt und abgelegt werden.

Analog kann bei der Ermittlung der Korrekturwerte für die anderen Einflussparameter verfahren werden.

Ergeben sich $n$ Einflussparameter $E_1$ bis $E_n$, so kann für $n$ Korrekturwerte die tatsächlich zugegebene Dosiermenge beispielsweise durch Multiplikation

$$m_{Reduktionsmittel}(t) = K_1(E_1(t')) \bullet K_2(E_2(t'')) \bullet K_3(E_3(t''')) \bullet ... K_n(E_n(t'''')) \bullet$$

$$m_{Reduktionsmittel,Modell} \qquad .$$

oder Addition

$$m_{Reduktionsmittel}(t) = ( K_1(E_1(t')) + K_2(E_2(t'')) + K_3(E_3(t''')) + ... K_n(E_n(t''''))) +$$

$$m_{Reduktionsmittel,Modell}$$

der Korrekturwerte bestimmt werden.

Die Addition der Korrekturwerte findet meist dann Anwendung, wenn es sich bei den Korrekturwerten um Absolutwerte handelt, die Multiplikation, wenn die Korrekturwerten Relativwerte enthalten.

Auch das Aufstellen einer mehrparametrigen Korrekturfunktion $K$, in der die Einflussparameter $E_1$ bis $E_n$ enthalten sind, ist denkbar:

$$m_{Reduktionsmittel}(t) = K(E_1(t'), E_2(t''), E_3(t'''), ... E_n(t'''')) \bullet m_{Reduktionsmittel,Modell}$$

Die einzelnen Korrekturwerte für die Einflussparameter können, müssen aber nicht zu unterschiedlichen Zeiten $t'$, $t''$, $t'''$ usw. bestimmt worden sein.

Die Korrekturwerte werden so lange eingefroren bzw. festgehalten und zur Korrektur der Modellwerte und damit der Steuerung weiter verwendet, bis wieder eine erneute Überprüfung der Emissionen durchgeführt und neue Korrekturwerte ermittelt werden können.

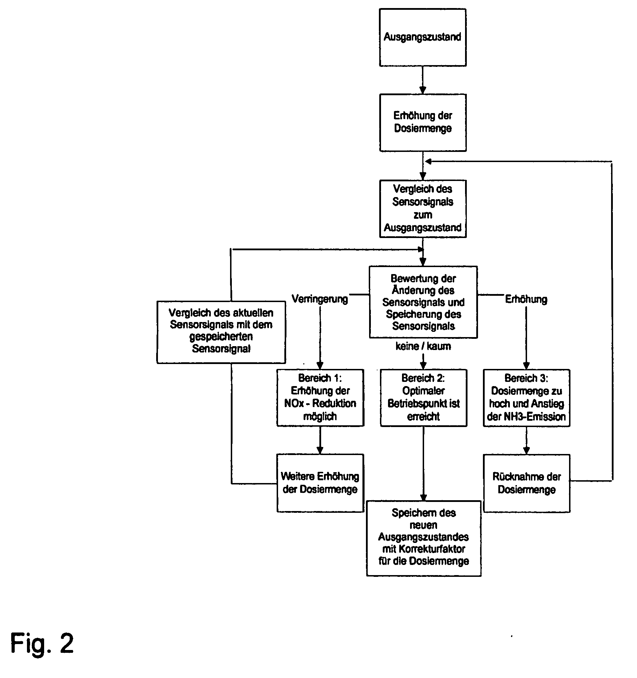

Fig. 2 zeigt in einem Flussdiagramm, die Steuerschritte zur Ermittlung eines Korrekturwertes. Wie bereits ausgeführt, wird der dort beispielhaft gezeigte Ablauf bei Vorliegen eines stationären Betriebszustandes der Brennkraftmaschine durchgeführt. Die Abläufe zur Feststellung, dass ein stationärer Betriebszustand vorliegt, sind im Flussdiagramm jedoch nicht gezeigt. Unter einem stationären Betriebszustand wird verstanden, dass sich die wesentlichen auf die Brennkraftmaschine wirkenden Einflussgrößen oder Betriebsparameter nicht nennenswert ändern. Festgestellt wird das Vorliegen eines stationären Betriebszustandes durch das Überwachen der besagten Einflussgrößen mittels des Steuergerätes. Ausgeführt werden die angesprochenen Abläufe über, im Steuergerät als Steuerprogramme implementierte Steuerungsabläufe, dabei sind die angesprochenen Steuerungsabläufe Teile von übergeordneten Steuerungsabläufen. Steuergeräte der angesprochenen Art sind Bestandteil aller modernen Brennkraftmaschinen.

Ausgehend von einem Ausgangszustand erfolgt zunächst eine Erhöhung der Dosiermenge und sodann ein Vergleich des aktuellen Sensorsignals mit dem Ausgangszustand. Die Veränderung des aktuellen Sensorsignals zum Ausgangszustand wird in einem nächsten Schritt durch das Steuergerät bewertet und gleichzeitig der Wert des aktuellen Sensorsignals abgespeichert. Die Bewertung kann dabei zu drei alternativen Ergebnissen führen:

1. Eine Erhöhung der Dosiermenge führt zu einer Verringerung des Sensorsignals:

Analog zu Fig.1 wird das Abgasnachbehandlungssystem im Bereich 1 betrieben. Dies bedeutet, dass die zusätzlich zugeführte Reduktionsmittelmenge zur Reduktion der Stickoxide geführt hat, d.h. der $NO_X$-Sensor detektiert $NO_X$.

2. Eine Erhöhung der Dosiermenge führt zu keiner oder nur einer geringen Veränderung des Sensorsignals (entspricht Bereich 2 in Fig. 1):

Der optimale Betriebspunkt des SCR-Systems ist erreicht, d.h. $NO_X$ und $NH_3$ sind minimal.

3. Eine Erhöhung der Dosiermenge führt zu einer Erhöhung des Sensorsignals (entspricht Bereich 3 in Fig. 1):

Das SCR-System ist "überfahren", die zusätzlich zugeführte Reduktionsmittelmenge führt zu einem Anstieg der $NH_3$-Emissionen, d.h. der $NO_X$-Sensor detektiert vorwiegend $NH_3$.

Ausgehend von den vorstehend aufgeführten möglichen Ergebnissen der Bewertung sind drei alternative Verfahrensführungen erforderlich. Befindet sich das das Abgasnachbehandlungssystem im Bereich 1, wird in einem nächsten Schritt durch das Steuergerät die Dosiermenge um einen vorgegebenen Betrag erhöht. Sodann wird das aktuelle Sensorsignal mit dem gespeicherten Sensorsignal verglichen und erneut die Änderung des Sensorsignals bewertet bzw. das aktuelle Sensorsignal gespeichert. Falls der $NO_X$-Sollwert bzw. der $NO_X$-Sollumsatz bereits vor der Überprüfung erreicht waren, ist keine Korrektur durch Anpassung des Korrekturwerts notwendig. Falls der $NO_X$-Sollwert bzw. der $NO_X$-Sollumsatz noch nicht erreicht waren, kann eine Anpassung durch Veränderung des Korrekturwertes erfolgen.

Befindet sich das Abgasnachbehandlungssystem im Bereich 3, wird in einem nächsten Schritt durch das Steuergerät die Dosiermenge um einen vorgegebenen Betrag vermindert. Sodann wird das aktuelle Sensorsignal mit dem Ausgangszustand verglichen und erneut die Änderung des Sensorsignals bewertet bzw. das aktuelle Sensorsignal gespeichert.

Befindet sich das Abgasnachbehandlungssystem im Bereich 2, ist der optimale Betriebspunkt erreicht, das Steuergerät ermittelt die Differenz zwischen der Dosiermenge gemäß Ausgangszustand und der aktuellen Dosiermenge als Korrekturwert und speichert diesen zusammen mit dem neuen Ausgangszustand.

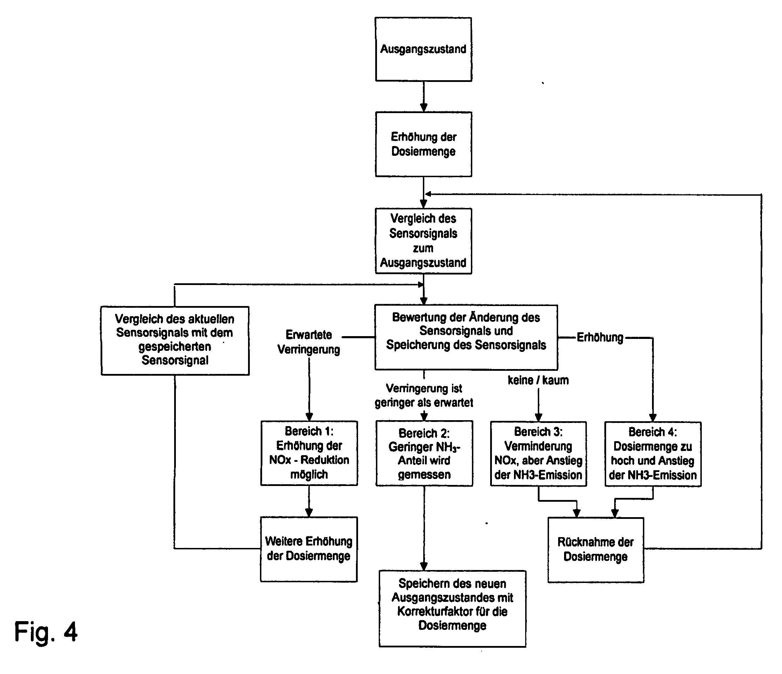

Fig. 4 zeigt ein weiters Flussdiagramm, das im Prinzip dem nach Fig. 2 entspricht, lediglich die Bewertung der Änderung des Sensorsignals wird differenzierter durchgeführt um den optimalen Betriebspunkt besser zu treffen. Auch dieser beispielhaft gezeigte Steuerablauf wird bei Vorliegen eines stationären Betriebszustandes der Brennkraftmaschine durchgeführt. Ausgehend von einem Ausgangszustand erfolgt zunächst eine Erhöhung der Dosiermenge und sodann ein Vergleich des aktuellen Sensorsignals mit dem Ausgangszustand. Die Veränderung des aktuellen Sensorsignals zum Ausgangszustand wird in einem nächsten Schritt durch das Steuergerät bewertet und gleichzeitig der Wert des aktuellen Sensorsignals abgespeichert. Die Bewertung kann dabei zu vier alternativen Ergebnissen führen:

1. Eine Erhöhung der Dosiermenge führt zu einer Verringerung des Sensorsignals (entspricht Bereich 1 in Fig. 3):

Dies bedeutet, dass die zusätzlich zugeführte Reduktionsmittelmenge zur Reduktion der Stickoxide geführt hat, d.h. der $NO_X$-Sensor detektiert ausschließlich $NO_X$. Demzufolge kann die Dosiermenge zum Erreichen eines gewünschten Umsatzes weiter angehoben werden, d.h. der Korrekturwert kann angehoben werden.

2. Eine Erhöhung der Dosiermenge führt zwar zu einer Verringerung des Sensorsignals, diese entspricht jedoch nicht der erwarteten Reduktion (entspricht Bereich 2 in Fig. 3):

Dies bedeutet, dass zusätzlich zur $NO_X$-Emission auch ein $NH_3$-Anteil gemessen wird, was zu einem Abflachen der Steigung führt. Der Übergang von Bereich 1 in den Bereich 2 kann also optimaler Betriebspunkt bezeichnet werden, da hier bei maximalem $NO_X$-Umsatz gerade noch kein $NH_3$-Schlupf auftritt, der Korrekturwert sollte demnach nicht verändert werden.

3. Eine Erhöhung der Dosiermenge führt zu keiner Veränderung des Sensorsignals (entspricht Bereich 3 in Fig. 3):

Das bedeutet, dass die Verminderung von $NO_X$ durch die Emission von $NH_3$ kompensiert wird. Der optimale Betriebspunkt ist überschritten, die Dosiermenge und demzufolge der Korrekturwert müssen reduziert werden.

4. Eine Erhöhung der Dosiermenge führt zu einer Erhöhung des Sensorsignals (entspricht Bereich 4 in Fig. 3):

Das SCR-System ist "überfahren", die zusätzlich zugeführte Reduktionsmittelmenge führt zu einem Anstieg der $NH_3$-Emissionen, d.h. der $NO_X$-Sensor detektiert vorwiegend $NH_3$. Die Dosiermenge und demzufolge der Korrekturwert müssen reduziert werden.

Ausgehend von den vorstehend aufgeführten möglichen Ergebnissen der Bewertung sind vier alternative Verfahrensführungen erforderlich. Befindet sich das Abgasnachbehandlungssystem im Bereich 1 wird in einem nächsten Schritt durch das Steuergerät die Dosiermenge um einen vorgegebenen Betrag erhöht. Sodann wird das aktuelle Sensorsignal mit dem gespeicherten Sensorsignal verglichen und erneut die Änderung des Sensorsignals bewertet bzw. das aktuelle Sensorsignal gespeichert. Falls der $NO_X$-Sollwert bzw. der $NO_X$-Sollumsatz bereits vor der Überprüfung erreicht waren, ist keine Korrektur durch Anpassung des Korrekturwerts notwendig. Falls der $NO_X$-Sollwert bzw. der $NO_X$-Sollumsatz noch nicht erreicht waren, kann eine Anpassung durch Veränderung des Korrekturwerts erfolgen.

Befindet sich das Abgasnachbehandlungssystem im Bereich 3 oder 4, wird in einem nächsten Schritt durch das Steuergerät die Dosiermenge um einen vorgegebenen Betrag vermindert. Sodann wird das aktuelle Sensorsignal mit dem Ausgangszustand verglichen und erneut die Änderung des Sensorsignals bewertet bzw. das aktuelle Sensorsignal gespeichert.

Befindet sich das Abgasnachbehandlungssystem im Bereich 2, ist der optimale Betriebspunkt erreicht, das Steuergerät ermittelt die Differenz zwischen der Dosiermenge gemäß Ausgangszustand und der aktuellen Dosiermenge als Korrekturwert und speichert diesen zusammen mit dem neuen Ausgangszustand.

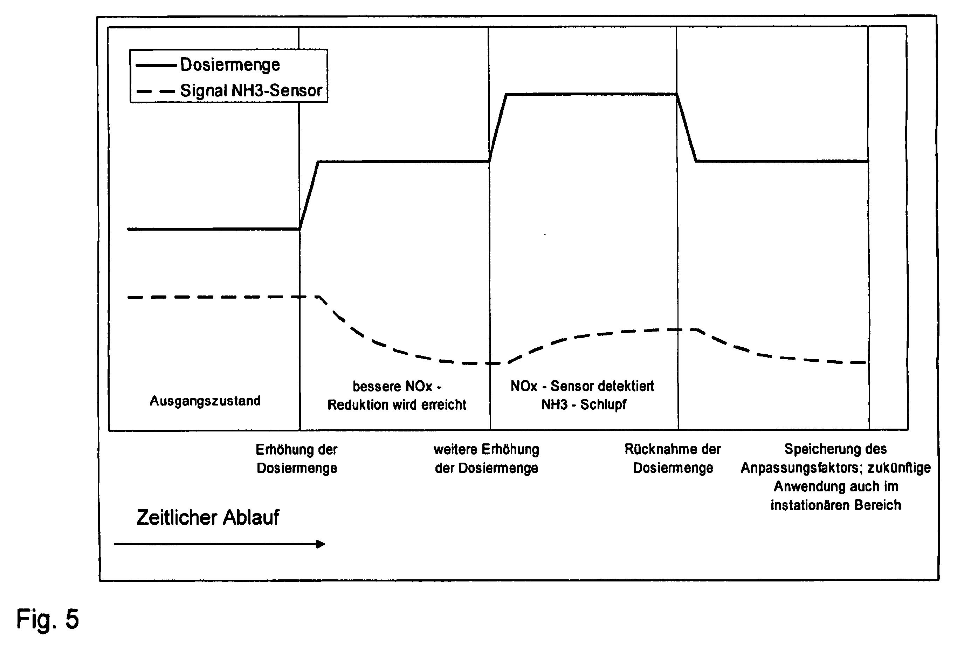

In Fig.5 sind beispielhaft der zeitliche Verlauf für die Dosiermenge, sowie die Antwort des $NO_X$-Sensors dargestellt:

Der Ausgangszustand wird durch eine Erhöhung der Dosiermenge verändert. Durch die höhere Menge an eingespritztem Reduktionsmittel wird eine bessere $NO_X$-Reduktion erreicht, diese äußert sich am $NO_X$-Sensor mit einem Absinken des Signals. Eine weitere Erhöhung der Dosiermenge führt jedoch zu keinem weiteren Rückgang des $NO_X$-Signals, da dieses durch das detektierte $NH_3$ wieder ansteigt. Der letzte Wert wird demzufolge verworfen, der vorherige Wert der Dosiermenge, der zu einer Reduktion der Stickoxide geführt hat wird verwendet und kann für zukünftige Zeitpunkte auch im instationären Bereich angewendet werden. Um aus der so gefundenen korrigierten Dosiermenge einen Korrekturwert abzuleiten, kann die gefundene Dosiermenge von der Dosiermenge gemäß Ausgangszustand subtrahiert werden, die Differenz entspricht dann dem Korrekturwert.

Selbstverständlich kann, abweichend von diesem Beispiel, der Korrekturwert auch durch die Aufsummierung des absoluten oder relativen Wertes der Veränderungen der Dosiermenge gegenüber dem Ausgangszustand gebildet werden.

Der gefundene Korrekturwert wird dann entsprechend den vorstehenden Ausführungen von dem Steuergerät gespeichert und zu späteren Zeitpunkten zur Anpassung der Dosierung des Reduktionsmittels verwendet.

Wie bereits oben beschrieben, sollten die Überprüfungen in einem stationären Betriebszustand des Systems durchgeführt werden. Ist dies nicht möglich, kann auch, wie ebenfalls bereits erwähnt, eine Integration oder Addition der Soll- und Ist- Werte über einen längeren Zeitraum erfolgen.

Als weitere Möglichkeit der Korrekturwertermittlung wurde die klassenbezogene Ermittlung der Korrekturwerte bereits vorstehend beschrieben. Dazu werden die Werte, die die relevanten Betriebsparameter annehmen können, in einem zeitlich vorgelagerten Vorgang, z.B. mit Hilfe einer bereits oben beschriebenen Referenzanordnung, in Wertebereiche oder Klassen aufgeteilt. Die Wertebereiche sind dabei so gewählt, dass der durch das Variieren des Betriebsparameterwertes bedingte Fehler bei der Ermittlung des Korrekturwertes vernachlässigbar ist. Die so ermittelten Wertebereiche oder Klassen für jeden der relevanten Betriebsparameter werden in die Steuergeräte der Serie eingespeichert, so dass auf diese zurückgegriffen werden kann.

Zu jedem der gespeicherten Wertebereiche wird nur ein Korrekturwert ermittelt, wobei der Wert des betrachteten Betriebsparameters während der Korrekturwertermittlung innerhalb des Wertebereiches variieren darf.

Verwendet wird der so ermittelte Korrekturwert dann für alle Betriebsparameterwerte die innerhalb des Wertebereiches, also der Klasse, liegen.

Beispielhaft ist das Verfahren der Klassen in nachfolgender Tabelle am Beispiel Abgasmassenstrom dargestellt.

| Abgasmassenstrom-Klassen[kg/h] | 100-1000 | 1001-2000 | 2001-3000 |
|---|---|---|---|
| Korrekturwert [%] | 120 | 90 | 130 |

Das Beispiel zeigt, dass für den Bereich von 100kg/h bis 3000kg/h lediglich drei Korrekturwerte ermittelt werden müssen. Dies ist deshalb verhältnismäßig einfach, weil in den meisten Fällen eine Korrekturwertermittlung abgeschlossen werden kann bevor der Betriebs- oder Einflussparameter, im vorliegenden Fall der "Abgasmassenstrom", eine Klassen verlässt.

Während des instationären Motorbetriebs kann der ermittelte Korrekturwert dann anschließend entweder für die gesamte Breite der Klasse gelten, oder jeweils nur für einen Wert der Klasse, beispielsweise untere Grenze, Mitte oder obere Grenze, wobei der aktuelle Korrekturwert dann,vorteilhaft durch lineare Interpolation aus der Kennlinie ermittelt und zur Anpassung der gesteuerten Dosiermenge verwendet wird.

Für den ersten Fall ergäbe sich für einen Massenstrom zwischen 1001 und 2000kg/h ein konstanter Korrekturwert von 90% um den die aus den Modellen ermittelte Dosiermenge durch Multiplikation mit dem Korrekturwert korrigiert würde, ab 2001kg/h würde mit 130% korrigiert werden.

Im anderen Fall ergäbe sich für einen Abgasmassenstrom von 1800kg/h mit linearer Interpolation, unter der Annahme das der vorab bestimmte Korrekturwert jeweils auf die Mitte der beiden nächstgelegenen Korrekturklassen bezogen ist, ein Korrekturwert von 102%

## Patentansprüche

**1.** Verfahren zur Anwendung in Verbindung mit einer Abgasnachbehandlungsanlage zur Dosierung eines ammoniakabspaltenden Reduktionsmittels in den Abgasstrom einer in einem Fahrzeug verbauten mit Luftüberschuss betriebenen Brennkraftmaschine, wobei

   - die Dosierung des Reduktionsmittels mittels einer von einem Steuergerät gesteuerten der Abgasnachbehandlungsanlage zugeordneten Dosiereinrichtung in den Abgasstrom erfolgt,
   - stromab zur Dosiereinrichtung im Abgasstrom, als weiterer Teil der Abgasnachbehandlungsanlage wenigstens ein SCR-Katalysator angeordnet ist,
   - die Dosiermenge von dem Steuergerät mittels eines in diesem gespeicherten, alle möglichen Betriebspunkte der Brennkraftmaschine und/ oder der Abgasnachbehandlungsanlage abdeckenden Models, in Abhängigkeit von wenigstens einem durch das Steuergerät ausgewerteten Betriebsparameters der Brennkraftmaschine und/ oder der Abgasnachbehandlungsanlage ermittelt und gesteuert zugegeben wird, wobei der jeweilige Augenblickswert des wenigstens einen Betriebsparameters den jeweiligen Betriebspunkt der Brennkraftmaschine und/oder der Abgasnachbehandlungsanlage bestimmt,

   **dadurch gekennzeichnet, dass**

   - die Dosiermenge in bestimmten Betriebsphasen definiert variiert und die Veränderung des Messwertes wenigstens eines stromab des SCR-Katalysators angeordneten $NO_X$-Sensors mit einem Erwartungswert, den das Steuergerät aus der Größe der Variation ermittelt, verglichen wird,
   - aus dem Grad der Übereinstimmung zwischen dem Erwartungswert und dem mittels des $NO_X$-Sensors ermittelten Istwert auf das Vorhandensein von $NO_X$ und/oder $NH_3$ geschlossen wird,
   - das Variieren der Dosiermenge so lange fortgeführt wird, bis entweder die $NO_X$-Sollkonzentration oder der daraus ermittelte $NO_X$-Sollumsatz erreicht sind oder durch Abweichung des Istwerts vom Erwartungswert auf das Vorhandensein von $NH_3$ geschlossen wird, oder der Istwert, und damit die Summe aus $NO_X$ und $NH_3$, ein Minimum öder einen vorgebbaren Wert erreicht,
   - aus der Dosiermenge vor dem Variieren der Dosiermenge und der Dosiermenge bei Erreichen der NOx-Sollkonzentration oder des daraus ermittelten NOx-Sollumsatzes oder Feststellen des Vorhandenseins von NH3 oder bei Erreichen eines Minimums oder vorgebbaren Wertes des Istwertes, wenigstens ein Korrekturwert ermittelt und in einem Speicher des Steuergerätes abgespeichert wird,
   - die Dosiermenge mittels des Korrekturwertes bei nachfolgenden Dosiervorgängen angepasst wird,
   - bei der Bestimmung des Korrekturwertes zusätzlich der Wert wenigstens eines Betriebsparameters bestimmt und in Verbindung mit dem Korrekturwert im Speicher des Steuergerätes abgespeichert wird und dass mittels des Korrekturwertes bei nachfolgenden Dosiervorgängen die Dosiermenge betriebsparameterbezogen angepasst wird.

**2.** Verfahren nach Anspruch 1, **dadurch gekennzeichnet, dass** es sich bei dem wenigstens einen Betriebsparameter um die Kühlmitteltemperatur und/oder die Öltemperatur und/oder die Kraftstofftemperatur und/oder der Kraftstoffeinspritzdruck und/oder die Sauglufttemperatur und/oder die Ladelufttemperatur und/oder die Turboladerdrehzahl und/oder den Ladedruck und/oder die Luftmasse und/oder die Abgasmasse und/oder die Fahrgeschwindigkeit und/oder die Motordrehzahl und/oder die Kraftstoffeinspritzmenge und/oder die Abgastemperaturen und/oder die Katalysatortemperatur und/oder die Reduktionsmitteleinspritzmenge und/oder die Abgasrückführungsrate und/oder den Abgasmassenstrom und/oder den Reduktionsmitteldruck und/oder die Betriebsstunden und/oder die Luftfeuchte und/oder den Atmosphärendruck und/oder die $NO_X$-Rohemission handelt.

3. Verfahren nach einem der vorangegangenen Ansprüche, **dadurch gekennzeichnet, dass** für unterschiedliche Betriebsparameter und/oder für unterschiedliche Werte der Betriebsparameter mittels des Steuergerätes unterschiedliche Korrekturwerte bestimmt und betriebsparameterbezogen und/oder betriebsparameterwertbezogen abgespeichert werden.

4. Verfahren nach einem der vorangegangenen Ansprüche, **dadurch gekennzeichnet, dass** die unterschiedlichen Korrekturwerte mittels des Steuergerätes in Form wenigstens einer Kennlinie und/oder wenigstens eines Kennfeldes und/oder wenigstens einer ein- oder mehrparametrigen Korrekturfunktion abgespeichert werden und dass die Korrekturwerte für nachfolgende Dosiervorgänge abhängig vom Wert des oder der Betriebsparameter der wenigstens einen Kennlinie und/oder dem wenigstens einen Kennfeldes und/oder der wenigstens einen ein- oder mehrparametrigen Korrekturfunktion entnommen werden.

5. Verfahren nach einem der vorangegangenen Ansprüche, **dadurch gekennzeichnet, dass** zur Ermittlung des Ist-Sensorwertes das Ausgangssignal des $NO_X$-Sensors oder eine davon abgeleitete Größe über eine vorgebbare Zeit aufaddiert oder aufintegriert wird.

6. Verfahren nach Anspruch 2-4, **dadurch gekennzeichnet, dass** wenigstens ein Betriebsparameter in klassenbildende Wertebereiche unterteilt ist und dass die Ermittlung von Korrekturwerten durch das Steuergerät klassenbezogen erfolgt.

7. Verfahren nach Anspruch 6, **dadurch gekennzeichnet, dass**, bei Verlassen einer Klasse wenigstens eines Betriebsparameters während der Ermittlung eines Korrekturwertes, die erreichten Teilergebnisse zwischengespeichert werden und dass beim wieder Eintreten in die Klasse die Ermittlung des Korrekturwertes mit den zwischengespeicherten Teilergebnissen fortgeführt wird.

8. Verfahren nach Anspruch 6, **dadurch gekennzeichnet, dass** bei Verlassen einer Klasse wenigstens eines Betriebsparameters während der Ermittlung eines Korrekturwertes, die erreichten Teilergebnisse verworfen werden.

9. Verfahren nach einem der vorangegangenen Ansprüche, **dadurch gekennzeichnet, dass** die Dosiermenge für das Reduktionsmittel in einem stationären Betriebszustand der Brennkraftmaschine und/oder des Katalysatorsystems variiert wird.

10. Verfahren nach Anspruch 8, **dadurch gekennzeichnet, dass** zur Ermittlung eines stationären Betriebszustands, die Kühlmitteltemperatur und/oder die Öltemperatur und/oder die Kraftstofftemperatur und/oder der Kraftstoffeinspritzdruck und/oder die Sauglufttemperatur und/oder die Ladelufttemperatur und/oder die Turboladerdrehzahl und/oder der Ladedruck und/oder die Fahrgeschwindigkeit und/oder die Motordrehzahl und/oder die Kraftstoffeinspritzmenge und/oder die Abgastemperaturen und/oder die Katalysatortemperatur und/oder Reduktionsmitteleinspritzmenge und/oder die Abgasrückführungsrate und/oder der Reduktionsmitteldruck und/oder die Emissionen und/oder das Kraftstoff-/Luftverhältnis und/ oder die zeitliche Änderung dieser Größen herangezogen wird.

11. Verfahren nach einem der vorangegangenen Ansprüche, **dadurch gekennzeichnet, dass** zur Ermittlung einer aktuellen betriebsparameterbezogenen Dosiermenge dann, wenn zu dem aktuellen Betriebsparameterwert kein Korrekturwert gespeichert ist, aus Korrekturwerten die zu benachbarten Betriebsparameterwerten gespeichert sind durch Interpolation mittels des Steuergerätes ein Korrekturwert erzeugt wird oder dass ein Korrekturwert verwendet wird, der einem zum aktuellen Betriebsparameterwerten benachbarten Betriebsparameterwert zugeordnet ist.

**Claims**

1. A method for use in conjunction with an exhaust aftertreatment system for dosing a reducing agent which splits off ammonia into the exhaust stream of an internal combustion engine, installed in a vehicle, which is operated with excess air, wherein

- the dosing of the reducing agent takes place by means of a dosing means controlled by a control unit and associated with the exhaust aftertreatment system into the exhaust stream,
- at least one SCR catalyst is arranged downstream from the dosing means in the exhaust stream, as a further part of the exhaust aftertreatment system,
- the dosing amount is determined by the control unit by means of a model stored therein which covers all possible operating points of the internal combustion engine and/or of the exhaust aftertreatment system, dependent on at least one operating parameter of the internal combustion engine and/or the exhaust aftertreatment system evaluated by the control unit, and is added in controlled manner, the respective momentary value of the at least one operating parameter determining the respective operating point of the internal combustion engine and/or of the exhaust aftertreatment system,

**characterised in that**

- the dosing amount is varied in defined manner in certain operating phases and the change in the measured value of at least one $NO_x$ sensor arranged downstream from the SCR catalyst is compared with an expected value which the control unit determines from the size of the variation,
- a conclusion is drawn about the presence of $NO_x$ and/or $NH_3$ from the degree of matching between the expected value and the actual value determined by means of the $NO_x$ sensor,
- the varying of the dosing amount is continued until either the desired $NO_x$ concentration or the desired $NO_x$ conversion determined therefrom is achieved or a conclusion is drawn about the presence of $NH_3$ due to the deviation of the actual value from the expected value, or the actual value, and hence the total of $NO_x$ and $NH_3$, reaches a minimum or a pre-settable value,
- at least one correction value is determined from the dosing amount before the varying of the dosing amount and the dosing amount upon reaching the desired $NO_x$ concentration or the desired $NO_x$ conversion determined therefrom or establishing the presence of $NH_3$ or upon reaching a minimum or pre-settable value of the actual value, and said correction value is stored in a memory of the control unit,
- the dosing amount is adapted by means of the correction value in subsequent dosing operations,
- upon the determination of the correction value additionally the value of at least one operating parameter is determined and is stored in conjunction with the correction value in the memory of the control unit, and **in that** the dosing amount is adapted in operating-parameter-related manner upon subsequent metering operations, by means of the correction value.

2. A method according to Claim 1, **characterised in that** the at least one operating parameter is the coolant temperature and/or the oil temperature and/or the fuel temperature and/or the fuel-injection pressure and/or the suction-air temperature and/or the charge-air temperature and/or the turbocharger speed and/or the charging pressure and/or the air mass and/or the exhaust mass and/or the driving speed and/or the engine speed and/or the fuel-injection amount and/or the exhaust temperatures and/or the catalyst temperature and/or the amount of reducing agent injected and/or the exhaustgas recirculation rate and/or the exhaust mass stream and/or the reducing-agent pressure and/or the operating hours and/or the air humidity and/or the atmospheric pressure and/or the untreated $NO_x$ emission.

3. A method according to one of the preceding claims, **characterised in that** different correction values for different operating parameters and/or for different values of the operating parameters are determined by means of the control unit and stored in operating-parameter-related manner and/or in operating-parameter-value-related manner.

4. A method according to one of the preceding claims, **characterised in that** the different correction values are stored by means of the control unit in the form of at least one characteristic curve and/or at least one set of characteristic curves and/or at least one one-parameter or multi-parameter correction function, and **in that** the correction values for subsequent dosing operations are taken dependent on the value of the operating parameter(s) from the at least one characteristic curve and/or the at least one set of characteristic curves and/or the at least one one-parameter or multi-parameter correction function.

5. A method according to one of the preceding claims, **characterised in that** the output signal of the $NO_x$ sensor or a variable derived therefrom is added up or integrated over a pre-settable time for determining the actual sensor value.

6. A method according to Claims 2-4, **characterised in that** at least one operating parameter is subdivided into class-forming value ranges, and **in that** the determination of correction values by the control unit takes place in class-related manner.

7. A method according to Claim 6, **characterised in that**, upon leaving a class of at least one operating parameter during the determination of a correction value, the partial results obtained are temporarily stored, and **in that** upon re-entering the class the determination of the correction value is continued with the temporarily stored partial results.

8. A method according to Claim 6, **characterised in that** upon leaving a class of at least one operating parameter during the determination of a correction value, the partial results obtained are discarded.

9. A method according to one of the preceding claims, **characterised in that** the dosing amount for the reducing agent is varied in a stationary operating state of the internal combustion engine and/or of the catalyst system.

10. A method according to Claim 8, **characterised in that** the coolant temperature and/or the oil temperature and/or the fuel temperature and/or the fuel-injection pressure and/or the suction-air temperature and/or the charge-air temperature and/or the turbocharger speed and/or the charging pressure and/or the driving speed and/or the engine speed and/or the fuel-injection amount and/or the exhaust temperatures and/or the catalyst temperature and/or amount of reducing agent injected and/or the exhaustgas recirculation rate and/or the reducing-agent pressure and/or the emissions and/or the fuel/air ratio and/or the change over time of these values is used for determining a stationary operating state.

11. A method according to one of the preceding claims, **characterised in that**, for determining a current operating-parameter-related dosing amount, when no correction value is stored for the current operating-parameter value, a correction value is produced from correction values which are stored for neighbouring operating-parameter values by interpolation by means of the control unit, or **in that** a correction value is used which is associated with an operating-parameter value neighbouring the current operating-parameter values.

**Revendications**

1. Procédé appliqué en liaison avec une installation de post-traitement des gaz d'échappement pour doser un agent réducteur dégageant de l'ammoniac dans la veine des gaz d'échappement d'un moteur à combustion interne équipant un véhicule et fonctionnant avec un excédent d'air, selon lequel

   - on effectue le dosage de l'agent réducteur dans la veine des gaz d'échappement à l'aide d'une installation de dosage associée à une installation de post-traitement des gaz d'échappement commandée par un appareil de commande,
   - en aval de l'installation de dosage, dans la veine des gaz d'échappement, l'autre partie de l'installation de post-traitement des gaz d'échappement est constituée par au moins un catalyseur SCR,
   - la quantité à doser est déterminée et est fournie de manière commandée par l'appareil de commande à l'aide d'un modèle enregistré dans celui-ci et couvrant tous les points de fonctionnement possibles du moteur à combustion interne et/ou de l'installation de post-traitement des gaz d'échappement, en fonction d'au moins un paramètre de fonctionnement du moteur à combustion interne et/ou de l'installation de post-traitement des gaz d'échappement, le paramètre étant exploité par l'appareil de commande,

      * la valeur instantanée respective d'au moins ce paramètre de fonctionnement déterminant le point de fonctionnement respectif du moteur à combustion interne et/ou de l'installation de post-traitement des gaz d'échappement,

   procédé **caractérisé en ce que**
   - la quantité à doser varie de manière définie dans certaines phases de fonctionnement et la variation de la valeur de mesure d'au moins un capteur $NO_x$ installé en aval du catalyseur SCR est comparée à une valeur prévisionnelle que détermine l'appareil de commande à partir de l'importance de la variation,
   - à partir du degré de concordance entre la valeur prévisionnelle et la valeur réelle fournie par le capteur $NO_x$, on conclut à la présence d'oxydes d'azote $NO_x$ et/ou d'ammoniac $NH_3$,
   - on continue de faire varier la quantité à doser jusqu'à ce que la concentration de consigne en oxydes d'azote $NO_x$ et/ou la conversion de consigne d'oxydes d'azote $NO_x$ qui a été déterminée ont été atteintes ou si l'écart entre la valeur réelle et la valeur prévisionnelle, permet de conclure à la présence d'ammoniac $NH_3$ ou encore si la valeur réelle et ainsi la somme de $NO_x$ et de $NH_3$ atteint un minimum ou une valeur prédéfinie,
   - à partir de la quantité à doser avant la variation de la quantité à doser et de la quantité à doser lorsqu'on atteint la concentration de consigne $NO_x$ ou la conversion de consigne $NO_x$ que l'on en déduit ou la constatation de la présence d'ammoniac NH$_3$ ou lorsqu'on atteint un minimum ou une valeur prédéfinie de la valeur réelle, on détermine alors au moins une valeur de correction et on l'enregistre dans une mémoire de l'appareil de commande,

- on adapte la quantité à doser avec la valeur de correction pour les opérations de dosage suivantes,
- en déterminant la valeur de correction, en plus on détermine la valeur d'au moins un paramètre de fonctionnement et en liaison avec la valeur de correction, on l'enregistre dans la mémoire de l'appareil de commande et à l'aide de la valeur de correction lors des opérations de dosage suivantes, on adapte la quantité à doser en référence au paramètre de fonctionnement.

2. Procédé selon la revendication 1,
**caractérisé en ce qu'**
au moins un paramètre de fonctionnement est la température d'agent de refroidissement et/ou la température de l'huile et/ou la température du carburant et/ou la pression d'injection de carburant et/ou la température de l'air aspiré et/ou la température de l'air de suralimentation et/ou la vitesse de rotation du turbocompresseur et/ou la pression de suralimentation et/ou la masse d'air et/ou la masse des gaz d'échappement et/ou la vitesse de circulation et/ou le régime du moteur et/ou la quantité de carburant injectée et/ou la température des gaz d'échappement et/ou la température du catalyseur et/ou la quantité injectée d'agent réducteur et/ou le coefficient de recyclage des gaz d'échappement et/ou le débit massique des gaz d'échappement et/ou la pression d'agent réducteur et/ou les heures de fonctionnement et/ou l'humidité de l'air et/ou la pression atmosphérique et/ou les émissions brutes d'oxydes d'azote NO$_x$.

3. Procédé selon l'une des revendications précédentes,
**caractérisé en ce que**
pour des paramètres de fonctionnement différents et/ou des valeurs différentes des paramètres de fonctionnement, on détermine les valeurs de correction différentes avec l'appareil de commande et on les enregistre en référence aux paramètres de fonctionnement et/ou aux valeurs des paramètres de fonctionnement.

4. Procédé selon l'une des revendications précédentes,
**caractérisé en ce qu'**

- on enregistre les différentes valeurs de correction à l'aide de l'appareil de commande sous la forme d'au moins une courbe caractéristique et/ ou d'au moins un champ de caractéristiques et/ ou d'au moins une ou plusieurs fonctions de correction à paramètres multiples, et
- on prélève les valeurs de correction pour les opérations de dosage suivantes en fonction de la valeur du ou des paramètres de fonctionnement d'au moins une courbe caractéristique et/ou d'au moins un champ de caractéristiques et/ou d'au moins une fonction de correction à un ou plusieurs paramètres.

5. Procédé selon l'une des revendications précédentes,
**caractérisé en ce que**
pour déterminer la valeur réelle du capteur, on additionne ou on intègre le signal de sortie du capteur NO$_x$ ou une grandeur qui en est déduite sur une période prédéfinie.

6. Procédé selon les revendications 2 à 4,
**caractérisé en ce qu'**

- on subdivise au moins un paramètre de fonctionnement en plages de valeurs constituant des classes, et
- on détermine les valeurs de correction par l'appareil de commande en se référant aux classes.

7. Procédé selon la revendication 6,
**caractérisé en ce qu'**
en quittant une classe d'au moins un paramètre de fonctionnement pendant la détermination d'une valeur de correction, on enregistre provisoirement le résultat partiel obtenu, et
lorsqu'on repasse dans la classe, on poursuit la détermination de la valeur de correction avec les résultats partiels enregistrés provisoirement.

8. Procédé selon la revendication 6,
**caractérisé en ce qu'**
en quittant une classe d'au moins un paramètre de fonctionnement pendant la détermination d'une valeur de correction, on rejette les résultats partiels obtenus.

9. Procédé selon l'une des revendications précédentes,
   **caractérisé en ce qu'**
   on fait varier la quantité à doser pour l'agent réducteur dans un état de fonctionnement stationnaire du moteur à combustion interne et/ou du système de catalyseur.

10. Procédé selon la revendication 8,
    **caractérisé en ce que**
    pour déterminer un état de fonctionnement stationnaire, on utilise la température de l'agent de refroidissement et/ou la température de l'huile et/ou la température du carburant et/ou la pression d'injection de carburant et/ou la température de l'air aspiré et/ou la température de l'air de suralimentation et/ou la vitesse de rotation du turbocompresseur et/ou la pression de suralimentation et/ou la vitesse de circulation et/ou le régime moteur et/ou la quantité de carburant injectée et/ou la température des gaz d'échappement et/ou la température du catalyseur et/ou la quantité injectée d'agent réducteur et/ou le coefficient de recyclage des gaz d'échappement et/ou la pression d'agent réducteur et/ou les émissions et/ou le rapport carburant/air et/ou la variation de ces grandeurs en fonction du temps.

11. Procédé selon l'une des revendications précédentes,
    **caractérisé en ce que**
    pour déterminer la quantité actuelle à doser, rapportée au paramètre de fonctionnement, si aucune valeur de correction n'est enregistrée pour la valeur actuelle du paramètre de fonctionnement, à partir de valeurs de correction enregistrées pour les valeurs voisines du paramètre de fonctionnement, on génère une valeur de correction par interpolation dans l'appareil de commande ou on utilise une valeur de correction associée à une valeur de paramètre de fonctionnement voisine des valeurs actuelles du paramètre de fonctionnement.

Fig. 1

Fig. 2

Fig. 3

Fig. 4

EP 2 226 482 B1

Fig. 5

EP 2 226 482 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3428232 A1
- DE 4315278 A1
- DE 19536571 A1
- DE 19906344 A1
- EP 898061 A1
- DE 10100420 A1
- JP 63038154 A
- JP 10062374 A
- JP 9288084 A
- US 20040159096 A1